**Europäisches Patentamt**

**European Patent Office**

**Office européen des brevets**

(19)

(11) Veröffentlichungsnummer : **0 393 159 B1**

(12) **EUROPÄISCHE PATENTSCHRIFT**

(45) Veröffentlichungstag der Patentschrift :
04.11.92 Patentblatt 92/45

(51) Int. Cl.⁵ : **G01G 3/16**

(21) Anmeldenummer : **89906695.5**

(22) Anmeldetag : **20.06.89**

(86) Internationale Anmeldenummer :
**PCT/CH89/00114**

(87) Internationale Veröffentlichungsnummer :
**WO 90/01147 08.02.90 Gazette 90/04**

(54) **MASSEN- UND KRAFTMESSGERÄT.**

(30) Priorität : **18.07.88 CH 2758/88**

(43) Veröffentlichungstag der Anmeldung :
**24.10.90 Patentblatt 90/43**

(45) Bekanntmachung des Hinweises auf die
Patenterteilung :
**04.11.92 Patentblatt 92/45**

(84) Benannte Vertragsstaaten :
**CH DE FR GB IT LI NL SE**

(56) Entgegenhaltungen :
**EP-A- 0 025 807**
**EP-A- 0 071 652**
**EP-A- 0 150 584**

(56) Entgegenhaltungen :
**EP-A- 0 195 876**
**EP-A- 0 291 258**
**DE-A- 3 301 117**
**DE-A- 3 336 250**

(73) Patentinhaber : **WIRTH GALLO MESSTECHNIK
AG**
**Sonnenbergstrasse 55**
**CH-8032 Zürich (CH)**

(72) Erfinder : **WIRTH, Johannes**
**Sonnenbergstr. 55**
**CH-8032 Zürich (CH)**

(74) Vertreter : **Salgo, Reinhold Caspar, Dr.**
**Patentanwalt Aretshalde 160**
**CH-8607 Aathal (CH)**

## Beschreibung

Die vorliegende Erfindung bezieht sich auf Massen- und Kraftmessgeräte mit elastischer Kraftuntersetzung über zwei parallelgeschaltete, elastische Kraftübertragungsketten, gegliedert in Primär- und Sekundärfeder. Geräte dieser Gattung sind bekannt, so beispielsweise aus den EP-B1 16 238, EP-B1 25 807 und dem DE Gbm. G 86 33 612.6. Bei den bekannten Geräten wird die zu messende Gesamtkraft verteilt auf zwei parallelgeschaltete Federn. Diese Parallelschaltung besteht aus der Hauptfeder, die im Regelfall den grössten Teil der Eingangskraft $F_i$ direkt an das Gestell des Gerätes ableitet (Primärfeder) und einer Nebenfeder. In Serie zur Nebenfeder ist der Kraftaufnehmer eingebaut, der - als Messwandler - die auf ihn einwirkende Kraft in eine elektrische Grösse umsetzt. Da alle bekannten Messwandler eine bestimmte elastische Nachgiebigkeit aufweisen, ist auch der Kraftaufnehmer als Feder aufzufassen, die also in Serie zur Nebenfeder geschaltet ist. Nebenfeder und Kraftaufnehmer bilden so zusammen die Sekundärfeder.

Im einfachsten Fall weisen Primär- und Sekundärfeder gemeinsame Anschlüsse auf, so dass die Eingangskraft $F_i$ bei beiden zur gleichen Einfederung führt. Die Eingangskraft verteilt sich auf die beiden Federn nach Massgabe von deren Härten. Sind $k_j$ die Härten der beiden Federn, $c_j$ die Nachgiebigkeiten ($c_j = \frac{1}{k_j}$) und $F_o$ der auf den Kraftaufnehmer wirkende Kraftanteil, so gilt für das Untersetzungsverhältnis $\underline{U}$:

$$U = \frac{F_o}{F_i} = \frac{k_2}{k_1 + k_2} = \frac{c_1}{c_1 + c_2} \quad (1)$$

Bezeichnet man ferner die Nachgiebigkeit der Nebenfeder mit $c_{21}$ und jene des Kraftaufnehmers (Messfeder) mit $c_{22}$, so ist auch

$$U = \frac{c_1}{c_1 + c_{21} + c_{22}} \quad (2)$$

In aufwendigeren Konstruktionen sind die Anschlüsse von Primär- und Sekundärfeder getrennt ausgeführt, jedoch so miteinander gekoppelt, dass die beiden Einfederungen zueinander proportional sind. Reduziert man rechnerisch alle Nachgiebigkeiten und Kräfte auf gemeinsame Anschlüsse, so gelten G1. (1) und (2) nach wie vor.

Alle in den G1. (1) und (2) enthaltenen Nachgiebigkeiten sind nach dem Hookeschen Gesetz Konstanten, sofern ihre Temperaturabhängigkeit ausser Betracht bleibt. Tatsächlich ist das Hookesche Gesetz mit

$$\frac{\Delta 1}{\Delta F} = c = \text{const}$$

($\Delta 1$ ist die Verlängerung oder Einfederung eines elastischen Körpers, $\Delta F$ die dazu aufgebrachte Kraft) lediglich eine gute Nähervng. Abweichungen von dieser Nähervng sind mehrere bekannt; eine davon ist beispielsweise die verzögerte Elastizität des Federmaterials, die zv einer zeitabhängigen, verzögerten Einfederung des daraus gefertigten Federkörpers führt. Diese Erscheinung wird "Kriechen" (engl. creep) genannt und ist in der Literatur beschrieben (so beispielsweise bei A.S. Nowick, B.S. Berry: Anelastic Relaxion in Crystalline Solids, Academic Press, New York und London, 1972).

Nennt man das Verhältnis von zeitabhängiger und zeitunabhängiger Nachgiebigkeit "relatives Kriechen" (dimensionslose Zahl), so ist diese Grösse materialabhängig und für ein bestimmtes Material abhängig sowohl von seiner Temperatur, als auch von der Art der Beanspruchung, also unterschiedlich bei Zug/Druck-Spannung einerseits und Schubspannung andererseits. Im Temperaturbereich von 0°C bis 40°C wurden Werte des relativen Kriechens einzelner Materialien von über 1/1000 gemessen.

Da die Erscheinung des Kriechens die Genauigkeit von Massen- und Kraftmessern beeinträchtigt, wurden verschiedene Lösungen vorgeschlagen zur Kompensation und/oder Reduktion des Einflusses der Kriecherscheinungen auf die Wäge- und Messresultate, so z.B. in der CH-A5 656 225. Die darin aufgezeigte Lösung vermag nicht allgemein zu befriedigen. Einerseits liegt dort die Lösung darin, alle Biegestellen avs dem gleichen Material zv fertigen, anderseits soll die Biegespannungsänderung überall gleich sein. Die Gleichheit der Materialien kann ohnehin kaum erfüllt werden, da das Messsystem in der Regel nicht avs dem gleichen Material gefertigt ist, wie die Biegefedern des Kraftteilers. Ferner wird bei der vorgeschlagenen Lösung davon ausgegangen, dass der Kriecheffekt unlinear mit der Biegespannung verläuft, was innerhalb der vorgesehenen Beanspruchungsgrenzen nicht notwendigerweise der Fall ist.

Die Figur 5 des EP-A1-195 876 ist ein Stab 21 dargestellt. Ebenso in Figur 2 des EP-A2-291 258 (veröffentlicht am 17,11,88) ein Stab 13a. Bei diesen Stäben ist die tatsächlich eintretende Torsion keine ein-lentige Funktion der last.

Die mit der vorliegenden Erfindung zu lösende Aufgabe besteht in der Schaffung eines Massen- oder Kraftmessers mit elastischer Untersetzung, bei dem die Kriecheigenschaften der einzelnen Bauteile so aufeinander abgestimmt sind, dass das Kriechen insgesamt kompensiert oder mindestens stark reduziert ist.

Die Lösung der vorstehenden Aufgabe ist im Patentanspruch 1 wiedergegeben.

Der Erfindungsgedanke wird nachfolgend in allgemeiner Weise und anhand der beigefügten Zeichnungen in einigen Ausführungsbeispielen näher erläutert.

Es zeigen dabei

Fig. 1a,b ein erstes Ausführungsbeispiel in Aufriss und Grundriss,

Fig. 2 ein zweites Ausführungsbeispiel,

Fig. 3 ein drittes Ausführungsbeispiel an einer bekannten Vorrichtung,

Fig. 4 ein Detail von Fig. 3,

Fig. 5 eine Variante zu Fig 4,

Fig. 6 ein viertes Ausführungsbeispiel an einer bekannten Vorrichtung,

Fig. 7 eine Variante zu Fig. 6.

Betrachtet man die G1(2), so ist leicht zu erkennen, dass das Untersetzungsverhältnis $\underline{U}$ und somit das Messresultat des Massen- oder Kraftmessers nicht im gleichen Ausmasse zu kriechen braucht, wie die einzelnen Federn des Kraftteilers. Sind alle beteiligten Federn gleich hinsichtlich Betrag und Zeitkonstante des relativen Kriechens, so ist $\underline{U}$ konstant und von Kriechen nicht behaftet. Da der Kraftaufnehmer Teil ist der Sekundärfeder, gehen mit Sicherheit verschiedene Materialien mit ihren Nachgiebigkeiten und ihren Kriecheigenschaften in $\underline{U}$ ein. Die vorliegende Erfindung zeichnet sich daher dadurch aus, dass auch unter diesen Voraussetzungen das "Kriechen" des Resultates stark reduziert, wenn nicht völlig kompensiert werden kann.

Die folgenden Gleichungen wollen den Erfindungsgedanken plausibilisieren:

Jede der beteiligten Nachgiebigkeiten kann dargestellt werden durch einen konstanten und einen zeitabhängigen Teil:

$$c_j = c_{jo} + c_j(t), \quad (3)$$

oder mit dem relativen Kriechen als

$$\varepsilon = \frac{c_j(t)}{c_{jo}} \quad (4)$$

$$c_j = c_{jo} (1 + \varepsilon_1) \quad (5)$$

Dies in G1. (1) eingesetzt, ergibt

$$U = \frac{c_{10}(1 + \varepsilon_1)}{c_{10}(1 + \varepsilon_1) + c_{20}(1 + \varepsilon_2)} \quad (6)$$

und unter Berücksichtigung von G1. (2):

$$\varepsilon_2 = \frac{c_{210}}{c_{20}} \cdot \varepsilon_{21} + \frac{c_{220}}{c_{20}} \cdot \varepsilon_{22} \quad (7)$$

Setzt man ferner

$$U_o = \frac{c_{10}}{c_{10} + c_{20}} \quad (8)$$

so erhält G1 (6) unter der Voraussetzung, die hier ohnehin zu gelten hat, dass $\varepsilon << 1$, die Form

$$U = U_o \left[ 1 + \frac{c_{20}}{c_{10} + c_{20}} (\varepsilon_1 - \varepsilon_2) \right] \quad (9)$$

Da für die unter den Oberbegriff fallenden Massen- und Kraftmesser generell $c_{10} << c_{20}$ gilt, darf GI (9) mit guter Näherung geschrieben werden zu

$$U = U_o \left[ 1 + (\varepsilon_1 - \varepsilon_2) \right] \quad (10)$$

Da die $\varepsilon_j$ der verschiedenen, in Betracht fallenden, Materialien je nach Beanspruchungstyp (Zug/Druck-Beanspruchung ($\sigma$) oder Schubbeanspruchung ($\tau$) unterschiedlich sind, besteht der in den Ausführungsbeispielen realisierte Erfindungsgedanke darin, dass mindestens ein Teil einer der Federn (Haupt-, Neben-, Messfeder) als Torsionsfeder ausgebildet und beansprucht ist. Damit gelingt es, die Differenz $\varepsilon_1 - \varepsilon_2$ in weiten Grenzen zu variieren, d.h. $\varepsilon_1 - \varepsilon_2 \gtreqless 0$ zu machen, was auch den Fall $\varepsilon_1 - \varepsilon_2 = 0$ einschliesst.

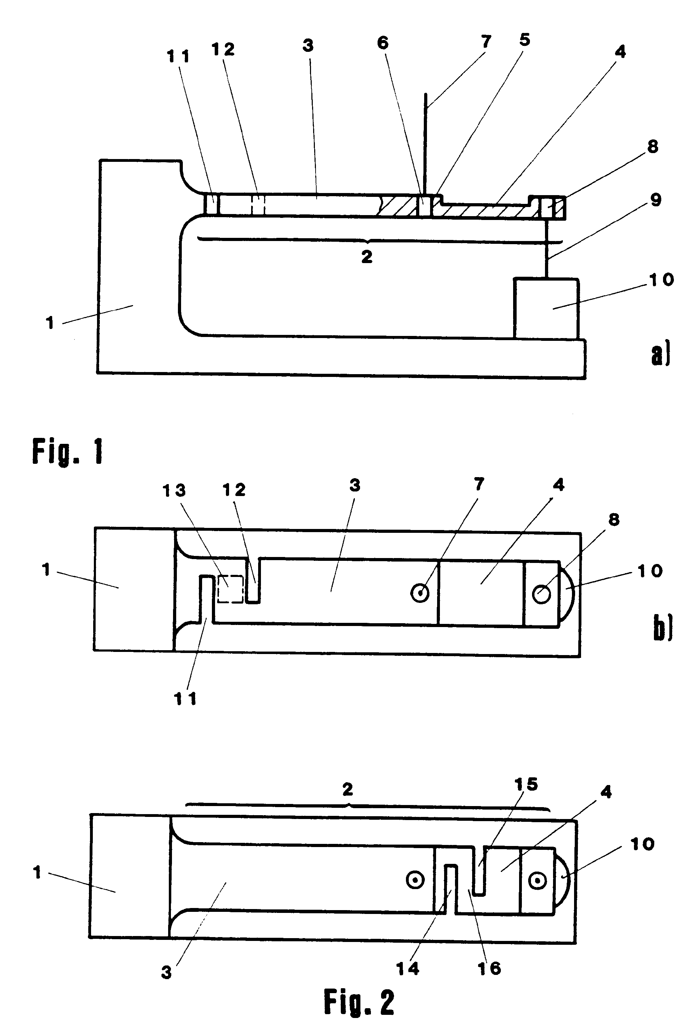

In Fig. 1a ist ein erstes Ausführungsbeispiel im Aufriss dargestellt. Ein starres Gestell 1 trägt an seinem linken Ende einen mit ihm fest verbundenen elastischen Arm 2. Dieser ist gegliedert in einen im wesentlichen parallelepipedischen Abschnitt 3, der direkt mit dem Gestell 1 verbunden ist, und einen - ebenfalls im wesentlichen parallelepipedischen - Abschnitt 4, der an den Abschnitt 3 anschliesst. Der Abschnitt 4 ist wesentlich dünner als der Abschnitt 3. An seinem rechten Ende trägt der Abschnitt 3 eine Bohrung 5,in die ein Befestigungsstück 6 eines Zugdrahtes 7 eingesetzt ist. Der Zugdraht 7, dessen weitere Führungsmittel nicht gezeichnet sind, weist senkrecht zur Ebene des Armes 2 nach oben. Am rechten Ende des Abschnittes 4 ist - mittels eines Befestigungstükkes 8 - ein weiterer, nun senkrecht nach unten weisender, Zugdraht 9 befestigt. An seinem unteren Ende ist der Zugdraht 9 am Krafteingang eines direkt mit dem Gestell 1 verbundenen Kraftaufnehmers 10 angeschlossen.

Nahe seinem linken Ende trägt der Abschnitt 3 zwei - senkrecht zur Achse des Armes 2 verlaufende - entgegengesetzte und versetzte Schlitze 11,12. Zwischen den Schlitzen verbleibt ein punktiert umrandeter Stab 13.

Ueber den Draht 7 wird die zu bestimmende Eingangskraft eingeleitet und zwischen den Abschnitten 3 und 4 nach Massgabe vor deren Härten verteilt.

Der Abschnitt 3 wirkt teils als Blattbiegefeder, teils als Schub- (Torsions-) Feder, da der Stab 13 auf Torsion beansprucht wird und auf diese Beanspruchung weich ist. Wegen seiner Dicke übernimmt der Abschnitt 3 den Hauptteil der Eingangskraft. Unter ihrer Wirkung erfährt das rechte Ende des Abschnittes 3 eine Verschiebung nach oben und eine Verdrehung im Gegenuhrzeigersinn bezüglich der Darstellung von Fig. 1a. Das mit dem Abschnitt 3 fest verbundene linke Ende des Abschnittes 4 erfährt die gleichen Lageänderungen.

Da das rechte Ende des Abschnittes 4 wegen der Fesselung durch den Zugdraht 9 die entsprechenden Lageänderungen nicht mitmachen kann, muss sich der Abschnitt 4 als Biegefeder verformen und einen Teil der Eingangskraft übernehmen. Wegen der Nachgiebigkeit des Kraftaufnehmers 10 verschiebt sich das rechte Ende des Abschnittes 4 etwas nach oben; seine Verdrehung wird durch den Zugdraht 9 aufgenommen.

Gemäss der allgemeinen Beschreibung ist der Abschnitt 3 die Hauptfeder, der Abschnitt 4 die Nebenfeder, der Kraftaufnehmer 10, der in Serie geschaltet ist zur Nebenfeder, die Messfeder. Diese Serieschaltung ist die Sekundärfeder.

Das relative Kriechen bei Zug/Druck-Beanspruchung der Abschnitte 3,4 des vorliegenden Ausführungsbeispiels - die aus einem Stück gefertigt sind, also aus dem selben Material bestehen - ist niedriger, als jene des Kraftaufnehmers 10. Ferner liegt das relative Kriechen der Sekundärfeder zwischen jenem ihrer Komponenten (dem Abschnitt 4 und dem Kraftaufnehmer 10); daher liegt es auch höher, als jenes des Abschnittes 3 in Bezug auf seine Beanspruchung als Biegefeder; die Sekundärfeder (4,10) würde die Hauptfeder (Abschnitt 3) überkompensieren.

Im Ausführungsbeispiel gemäss Fig. 1 ist das relative Kriechen des Materials, aus dem der Arm 2 gefertigt ist, kleiner für Zug/Druck-Beanspruchung als für Schub. Der durch die Schlitze 11,12 gebildete Stab 13 wird auf Torsion beansprucht. Die erfindungsgemässe Konstruktion der primärfeder bildet somit eine Serienschaltung einer Biegefeder (Abschnitt 3 von der Bohrung 5 bis zum Schlitz 12) und einer Torsionsfeder (Stab 13). Durch geeignete Wahl des Verhältnisses zwischen Biege- und Torsionsnach giebigkeit der Primärfeder, kann ihr relatives Kriechen gleich jenem der Sekundärfeder gemacht werden. Dies wird durch die Lage, die Breite und die Tiefe der Schlitze 11,12 im Verhältnis zu Länge, Breite und Dicke des Abschnittes 3 bewirkt.

Im Ausführungsbeispiel gemäss Fig. 2, das in der gleichen Lage gezeichnet ist, wie jenes von Fig. Ib, ist das relative Kriechen des Kraftaufnehmers 10 kleiner als jenes des Materials, aus dem der Arm 2 gefertigt ist, bezüglich Zug/Druck-Beanspruchung. Ferner ist das relative Kriechen bei Schubbeanspruchung dieses Materials nach wie vor höher, als jenes bei Zug/Druck-Beanspruchung. Der Abschnitt 3 wird erfindungsgemäss als reine Biegefeder gestaltet, der Abschnitt 4 als Serienschaltung einer Biegefeder mit einer Torsionsfeder. Letztere wird gebildet durch einen Stab 16, der durch zwei Schlitze 14,15 nahe am linken Ende des Abschnittes 4, analog zu den Schlitzen 11,12 von Fig. 1 zustandekommt. Damit wird wiederum das relative Kriechen von primär- und Sekundärfeder kompensiert, und die Untersetzung U̲ - damit auch das Messresultat - frei von Kriechen.

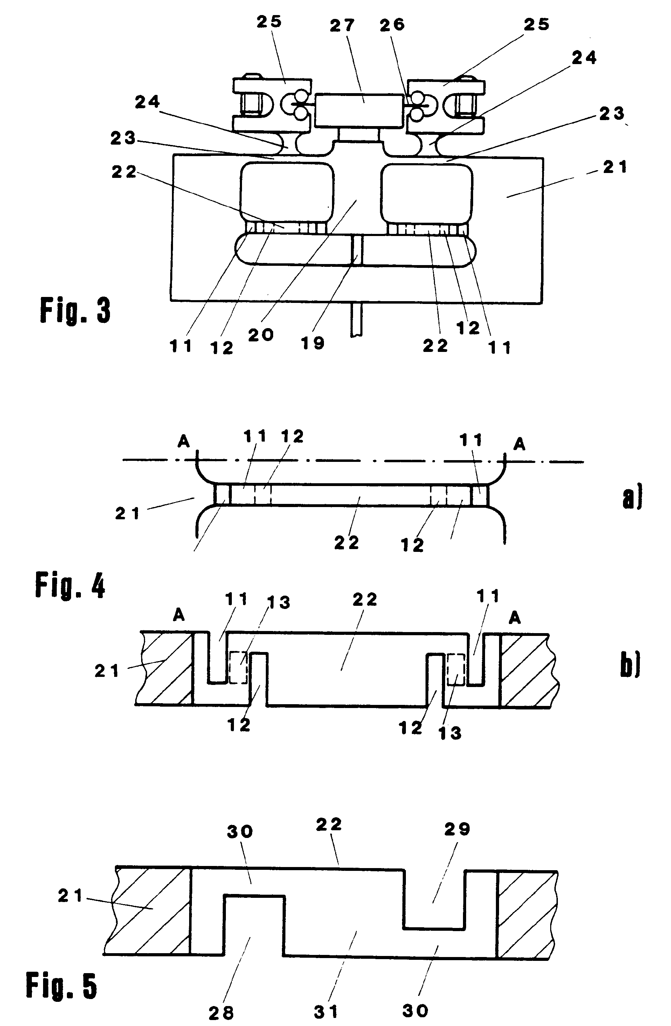

Das Ausführungsbeispiel gemäss Fig. 3 beruht auf einem Ausführungsbeispiel aus dem DE Gbm G 86 33 612.6: Ein Gestell 21, das auf einer nicht gezeichneten Plattform befestigt ist, trägt zwei Biegefedern 22, die Hauptfedern; zwei ebenfalls vom Gestell 21 ausgehende Biegefedern 23 tragen über je eine Stütze 24 je einen Befestigungskopf 25 für eine Mess-Saite 26, die grösstenteils von einem Anregungssystem 27 verdeckt ist. Die Biegefedern 22, 23 sind an einem zentralen Block 20 befestigt, auf den die zu messende Kraft über eine Stelze 19 aufgebracht wird. Die Biegefedern 23 zusammen mit den Nachgiebigkeiten der Stützen 24 und der Befestigungsköpfe 25 bilden die Nebenfeder, die in Serie geschaltet ist zur Nachgiebigkeit der Messfeder, gebildet durch die Mess-Saite 26. Analog zum Ausführungsbeispiel von Fig. 1 tragen hier beide Biegefedern 22 je zwei Schlitze 11,12.

In Fig. 4a,b ist die linke Biegefeder 22 allein dargestellt; in Fig. 4a in Seitenansicht, in Fig. 4b in Aufsicht. Zwischen den Schlitzen 11,12 entsteht wiederum ein auf Torsion beanspruchter Stab 13. Variation der Breite, der Tiefe und der Abstände der Schlitze 11,12 können die Anteile des relativen Kriechens durch Schub und Zug/Druckspannung von primär- und Sekundärfeder zum Ausgleich gebracht werden.

Fig. 5 zeigt eine Variante zu Fig. 4. Hier sind zwei breite, weit voneinander entfernte Schlitze 28, 29 angebracht. Die beiden Biegefeder-Paare 22,23 sind Bestandteile eines Parallelführungssystems. Dies bedeutet, dass das Gestell 21 und der zentrale Block 20 sich nur parallel zueinander versetzen, nicht jedoch verdrehen können. Diese Parallelversetzung bewirkt nun im Ausführungsbeispiel gemäss Fig. 5 insgesamt eine Torsionsbeanspruchung der Biegefeder 22, die sich nach Massgabe der Tiefe, der Breite und des gegenseitigen Abstandes der Schlitze 28,29 auf die mit 30,31 bezeichneten Partien verteilt. Sowohl die Biegestäbe 30 als auch der Stab 31 sind sowohl auf Biegung als auch auf Torsion beansprucht.

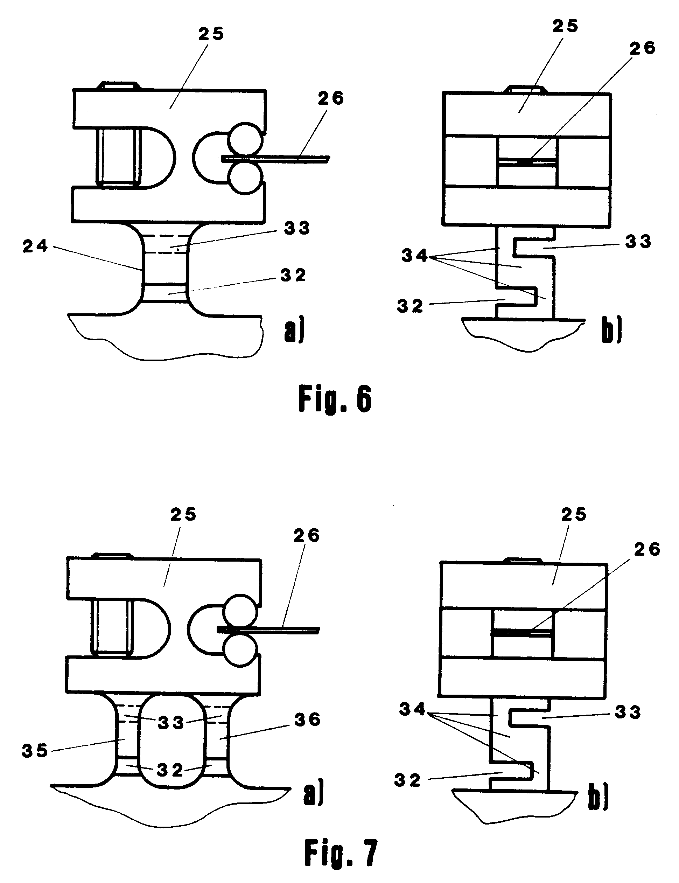

In Fig. 6a,b ist ein Befestigungskopf 25 mit seiner Stütze 24 aus Fig. 3 dargestellt. Fig. 6a zeigt das Ausführungsbeispiel in der gleichen Sicht, wie Fig. 3, Fig. 6b von der Mess-Saite 26 her, die geschnitten dargestellt ist. Während die Stütze 24 in Fig. 3 nur auf Biegung beansprucht ist, wird sie in der erfindungsgemässen Ausführung nach Fig. 6 sowohl auf Biegung als auch auf Torsion beansprucht. Zu diesem Zwecke trägt die Stütze 24 zwei seitliche Schlitze 32,33. Dadurch werden wieder sowohl auf Biegung als auch auf Torsion beanspruchte Stäbe 34 gebildet. Damit ist die Möglichkeit geschaffen, auch der Sekundärfeder einen Kriechanteil aus Torsionsbeanspruchung zuzuteilen.

Die Variante gemäss Fig. 7a,b zeigt einen Befestigungskopf 25, der anstelle der Stütze 24 aus Fig. 6 zwei Stützen 35,36 aufweist. Sie sind analog zu Fig. 6 mit Schlitzen 32,33 versehen, die in gleicher Art je drei Stäbe 34 bewirken, die sowohl auf Biegung als auch auf Torsion beansprucht sind und auch den diesbezüglichen Kriechanteil liefern.

## Patentansprüche

1. Massen- und Kraftmessgerät mit elastischer Kraftuntersetzung über zwei parallelgeschaltete, elastische Kraftübertragungsketten, gegliedert in Primär- und Sekundärfeder, dadurch gekennzeichnet, dass in mindestens einer der elastischen Kraftübertragungsketten neben auf Biegung beanspruchten Federn (3, 4, 22, 23, 24, 35, 36) mindestens ein auf Torsion beanspruchter Stab (13, 16, 30, 31, 34) vorhanden ist zur Kompensation des relativen Kriechens von Primär- und Sekundärfeder, wobei der auf Torsion beanspruchte Stab (13, 16, 30, 31, 34) so in die Kraftübertragungskette eingebaut ist, dass die entstehende Torsion eine eindeutige Funktion der zu messenden Kraft ist.

2. Massen- und Kraftmessgerät nach Patentanspruch 1, dadurch gekennzeichnet, dass nur in der Primärfeder auf Torsion beanspruchte Stäbe (13;30,31,30) vorhanden sind.

3. Massen- und Kraftmessgerät nach Patentanspruch 1, dadurch gekennzeichnet, dass nur in der Sekundärfeder auf Torsion beanspruchte Stäbe (16, 34) vorhanden sind.

4. Massen- und Kraftmessgerät nach Patentanspruch 2, dadurch gekennzeichnet, dass die in der Primärfeder vorhandenen auf Torsion beanspruchten Stäbe (13;30,31,30) gebildet sind durch zwei entgegengesetzte und versetzte Schlitze (11,12,28,29), die auf der auf Biegung beanspruchten Feder (3,22) angebracht sind.

5. Massen- und Kraftmessgerät nach Patentanspruch 4, dadurch gekennzeichnet, dass auf jeder auf Biegung beanspruchten Feder (3, 22) je zwei Schlitze (11, 12) vorhanden sind, die auf jeder auf Biegung beanspruchten Feder (3, 22) zwei auf Torsion beanspruchte Stäbe (13) bilden.

6. Massen- und Kraftmessgerät nach Patentanspruch 4, dadurch gekennzeichnet, dass auf jeder auf Biegung beanspruchten Feder (3,22) insgesamt zwei breite entgegengesetzte und versetzte Schlitze (28,29) vorhanden sind.

7. Massen- und Kraftmessgerät nach Patentanspruch 3, dadurch gekennzeichnet, dass die in der Sekundärfeder vorhandene auf Torsion beanspruchten Stäbe (16,34) gebildet sind durch zwei entgegengesetzte und versetzte Schlitze (15,16,32,33), die an der auf Biegung beanspruchten Feder (4,24) der Sekundärfeder angebracht sind.

## Claims

1. A mass and force measuring instrument with elastic force reduction via two elastic force transmission linkages which are connected in parallel, arranged in primary and secondary springs, characterised in that in at least one of the elastic force transmission linkages, in addition to springs which are loaded in bending (3, 4, 22, 23, 24, 35, 36), at least one rod (13, 16, 30, 31, 34) is present which is able to be loaded in torsion, to compensate the relative creeping of primary and secondary springs, in which the rod (13, 16, 30, 31, 34) which is loaded in torsion is incorporated into the force transmission linkage such that the torsion which occurs is a specific function of the force which is to be measured.

2. A mass and force measuring instrument according to Claim 1, characterised in that rods (13; 30, 31, 30) which are loaded in torsion are only present in the primary spring.

3. A mass and force measuring instrument according to Claim 1, characterised in that rods (16, 34) which are loaded in torsion are only present in the secondary spring.

4. A mass and force measuring instrument according to Claim 2, characterised in that the rods (13; 30, 31, 30) which are loaded in torsion and are present in the primary spring, are formed by two opposed and staggered slots (11, 12, 28, 29), which are arranged on the spring (3, 22) which is loaded in bending.

5. A mass and force measuring instrument according to Claim 4, characterised in that on each spring (3, 22) which is loaded in bending, there are two slots (11, 12) in each case, which form two rods (13), which are loaded in torsion, on each spring (3, 22) which is loaded on bending.

6. A mass and force measuring instrument according to Claim 4, characterised in that on each spring (3, 22) which is loaded in bending there are, in all, two wide opposed and staggered slots (28, 29).

7. A mass and force measuring instrument according to Claim 3, characterised in that the rods (16, 34) which are present in the secondary spring and are loaded in torsion, are formed by two opposed and staggered slots (15, 16, 32, 33), which are arranged on the spring (4, 24) of the secondary spring which is loaded in bending.

**Revendications**

1. Appareil de mesure de masses et de forces à démultiplication de forces élastique par l'intermédiaire de deux chaînes de transmission élastiques montées en parallèles et formées de ressorts primaire et secondaire, caractérisé en ce qu'il est prévu, dans l'une au moins des chaînes de transmission élastiques, en plus de ressorts (3, 4, 22, 23, 24, 35, 36) soumis à une flexion, au moins une barre (13, 16, 30, 31, 34) soumise à une torsion, destinée à compenser le fluage relatif des ressorts primaire et secondaire, la barre (13, 16, 30, 31, 34) soumise à une torsion étant intégrée dans la chaîne de transmission de telle sorte que la torsion se produisent est une fonction univalente de la force à mesurer.

2. Appareil de mesure de masses et de forces selon la revendication 1, caractérisé en ce que des barres (13 ; 30, 31, 30) soumises à une torsion ne sont prévues que dans le ressort primaire.

3. Appareil de mesure de masses et de forces selon la revendication 1, caractérisé en ce que des barres (16, 34) soumises à une torsion ne sont prévues que dans le ressort secondaire.

4. Appareil de mesure de masses et de forces selon la revendication 2, caractérisé en ce que les barres (13 ; 30, 31, 30) soumises à une torsion prévues dans le ressort primaire sont définies par deux fentes (11, 12, 28, 29) opposées et décalées qui sont ménagées sur le ressort (3, 22) soumis à une flexion.

5. Appareil de mesure de masses et de forces selon la revendication 4, caractérisé en ce qu'il est prévu, sur chaque ressort (3, 22) soumis à une flexion, deux fentes (11, 12) qui définissent sur chaque ressort (3, 22) soumis à une flexion deux barres (13) soumises à une torsion.

6. Appareil de mesure de masses et de forces selon la revendication 4, caractérisé en ce qu'il est prévu, sur chaque ressort (3, 22) soumis à une flexion, au total deux larges fentes (28, 29) opposées et décalées.

7. Appareil de mesure de masses et de forces selon la revendication 3, caractérisé en ce que les barres (16, 34) soumises à une torsion prévues dans le ressort secondaire sont définies par deux fentes (15, 16, 32, 33) opposées et décalées qui sont ménagées au niveau du ressort (4, 24), soumis à une flexion, du ressort secondaire.

**Fig. 1**

**Fig. 2**

Fig. 3

Fig. 4

a)

b)

Fig. 5

8

**Fig. 6**

**Fig. 7**